# EUROPÄISCHE PATENTSCHRIFT

(11) **EP 2 012 413 B1**
(45) Veröffentlichungstag und Bekanntmachung des Hinweises auf die Patenterteilung: **19.06.2013**
(21) Anmeldenummer: 07013011.7
(22) Anmeldetag: 03.07.2007
(51) Int. Cl.: H02K 41/03

(54) **Stabaktuator**
Rod actuator
Actionneur de barre

(43) Veröffentlichungstag der Anmeldung: 07.01.2009
(73) Patentinhaber: Hoerbiger Antriebstechnik GmbH, 86956 Schongau (DE)
(72) Erfinder: Fuerguth, Werner, 87640 Biessenhofen/Altdorf (DE)
(74) Vertreter: Kitzhofer, Thomas

(56) Entgegenhaltungen:
- EP-A- 1 463 186
- WO-A-03/017451
- DE-A1- 4 134 730
- DE-A1- 10 044 789
- US-A1- 2005 023 905

## Beschreibung

Die vorliegende Erfindung betrifft einen Stabaktuator gemäß dem Oberbegriff des Anspruches 1, so wie er auch aus der Druckschrift DE 4 134 730 A1 bekannt ist.

Aus der WO/2000/001059 A1 (Siemens AG) ist ein Synchronlinearmotor bekannt, der einen Primärteil und einen Sekundärteil hat. Das Sekundärteil hat durch Permanentmagnete gebildete Pole und ist in Bewegungsrichtung länger als das Primärteil. Das Primärteil hat Primärteilnuten zur Aufnahme von ein- oder mehrphasigen Wicklungen und trägt magnetische wirksame Bauteile, die zu einer Änderung der Magnetkraft in Bewegungsrichtung des Linearmotors führen.

Auch der aus der EP 06 004 984.8 bekannte Stabaktuator zur Schaltunterstützung einer externen, manuell eingeleiteten Kraft weist einen Läufer auf, der mit zumindest einem Permanentmagneten versehen ist und der den Ständer umgibt.

Die weichmagnetischen Werkstoffe, die bei den zuvor beschriebenen bekannten Stabaktuatoren zu deren Betrieb zwingend erforderlich sind, erzeugen im ausgeschalteten (stromlosen) Zustand Rastierkräfte, die eine Komforteinbuße darstellen. Zudem sind diese weichmagnetischen Materialien der größte Kostenfaktor dieser bekannten Stabaktuatoren.

Die Anforderungen an elektrische Antriebe im Antriebs- und Fahrwerksbereich von Personenkraftfahrzeugen und Nutzfahrzeugen sind in der Regel höher als im Komfortbereich. Allerdings variieren die Spezifikationen von Applikation zu Applikation. Bei der Getriebeaktuatorik, also bei elektrischen Stellantrieben für die Automatisierung oder die Unterstützung manuell aufgebrachter Betätigungskräfte, sind eher moderate Ausgangsleistungen gefordert. Der Energiebedarf ist klein, da in der Regel Stellaufgaben mit Betätigungszeiten in der Größenordnung von etwa 50 Millisekunden bis etwa 500 Millisekunden zu bewältigen sind. Im Bereich automotiver Nebenantriebe sind die Anforderungen sowohl an die Temperatur- und Vibrationsfestigkeit in der Regel relativ hoch. Dies ist bei Getriebeaktuatoren darin begründet, dass der Anbauort meist dicht beim Verbrennungsmotor oder dessen Abgasanlage liegt. Bei zunehmend auch in Personenkraftfahrzeugen verwendeten Dieselaggregaten sind diese beiden Faktoren gegenüber Ottomotoren noch verstärkt. Im Gegensatz zum Komfortbereich ist auch die geforderte Lebensdauer im Antriebs- und Fahrwerksbereich deutlich höher. Eine elektrisch betätigte Sitzverstellung ist erheblich weniger oft aktiv als ein Getriebeaktuator, der bei jedem Schaltvorgang im Einsatz ist. Die Anforderungen an einen Getriebeaktuator eines Nutzkraftfahrzeuges liegen zum Beispiel bei etwa 5 Millionen Schaltvorgängen. Ähnliches gilt für aktive Lenkungen oder für unterstützte Lenkungen. Bekannte Anordnungen sind außerdem in der Herstellung sehr kostenintensiv und benötigen relativ viel Bauraum.

Es ist daher Aufgabe der vorliegenden Erfindung, einen Stabaktuator der im Oberbegriff des Anspruches 1 angegebenen Art zu schaffen, der einen universellen Einsatz bei Erreichung eines geringen Bauraumes und einer ausreichenden Leistungsdichte sowie eines verbesserten Bedienkomforts ermöglicht.

Die Lösung dieser Aufgabe erfolgt durch die Merkmale des Anspruches 1.

Im Einzelnen ist der erfindungsgemäße Stabaktuator nach dem Reluktanzprinzip ausgeführt. Dementsprechend weist der erfindungsgemäße Stabaktuator (Linear-Reluktanzmotor) einen Läufer mit einem gezahnten Weicheisenkern auf. Dieses Material gewährleistet nach dem Ausschalten des Statorstromes das Verschwinden jedes Rest-Magnetfeldes. Dadurch kann der magnetische Fluss bei eingeschaltetem Strom ungehindert durch den Weicheisenkern fließen. Die Linearbewegung des Läufers/Stators kommt zustande, weil so der Abstand zwischen dem nächstliegenden Zahn des Läufers und dem Stator verringert werden kann und der magnetische Widerstand (Reluktanz) verringert wird.

Da somit der erfindungsgemäße Stabaktuator bzw. Reluktanzmotor keine Permanentmagnete aufweist, hat er im Gegensatz zum Permanentmagnetmotor auch kein Rastmoment bei ausgeschaltetem Strom. Dies stelle einen besonderen Vorteil insbesondere zur Erhöhung des Bedienkomforts dar.

Ein weiterer Vorteil ist die Wirtschaftlichkeit, da die teueren Magnetstoffe der eingangs erläuterten Aktuatoren entfallen.

Der erfindungsgemäße Stabaktuator ist insbesondere für die Unterstützung von Schalt- oder Automatikgetrieben geeignet. Dabei hat die Erfindung erkannt, dass eine solche Anordnung geeignet ist, die hohen Umweltanforderungen zu erfüllen, die aus den mechanischen Schwingungs- und Schockbelastungen am Getriebe und am Fahrwerk resultieren und auch durch hohe Temperaturen und/oder Temperaturschwankungen verschärft sein können. Gleichzeitig bietet der erfindungsgemäße Stabaktuator bei immerenger werdenden Bauraumsituationen eine ausreichend hohe Leistungsdichte und situationsgerechte Bauform in wirtschaftlich attraktiver Ausführung.

Die vorliegende Erfindung betrifft im Einzelnen einen Stabaktuator mit geringem radialem Bauraumerfordernis. Ein derartiger Stabaktuator ist zum Beispiel als Nebenantrieb im Automotive-Sektor zu verwenden. Sowohl im Antriebs- und Fahrwerksbereich, als auch im Komfortbereich spielen elektrische Aktuatoren eine zunehmende Rolle. Außerdem bieten sie als Ersatz für hydraulische Subsysteme erhebliche Vorteile im Hinblick auf die Kosten, die Systemintegration, sowie in der Funktionalität und in der Adaptierbarkeit an die jeweilige Situation und Anforderung. Insbesondere betrifft die Erfindung einen Stabaktuator, der als Getriebeaktuator, sowohl für handgeschaltete Getriebe und Kupplungen, für Achsgetriebe, als auch für Automatikgetriebe verwendet werden kann. Darüber hinaus kann der erfindungsgemäße Stabaktuator auch im Fahrwerksbereich (zum Beispiel aktives Fahrwerk oder aktive Lenkung, sowie Servolenkungen) sowie im Komfortbereich (zum Beispiel Sitzverstellung) eingesetzt werden.

Die Unteransprüche haben vorteilhafte Weiterbildungen der Erfindung zum Inhalt.

Vorzugsweise hat der Stabaktuator einen Ständer und einen Läufer, wobei der Ständer eine hohlzylindrische Gestalt aufweist und zumindest teilweise aus einem weichmagnetischen Material gebildet ist. In dem Ständer sind entlang dessen Umfangs mehrere Nuten im Abstand zueinander ausgebildet. In mindestens einer der Nuten ist eine Ständerspule angeordnet. Der Ständer ist, durch einen Arbeitsluftspalt getrennt, den Zähnen des Weicheisenkerns des Läufers zugewandt. Der Weicheisenkern ist an seiner von dem Arbeitsluftspalt abgewandten Seite an einem Läuferrohr angeordnet, das mit einem Stab verbunden ist. Der Stab ist relativ zu dem Ständer beweglich. Außerdem ist der Stab dazu eingerichtet, eine Betätigungskraft an seinem einen Ende aufzunehmen und an seinem anderen Ende die Betätigungskraft, von einer durch den Läufer aufgebrachten Motorkraft überlagert, abzugeben.

Dabei liegt der Erfindung vorzugsweise das Konzept zugrunde, den Stabaktuator als den Stab umgebenden Reluktanzmotor auszugestalten, wobei der Stab dazu dient, eine externe, zum Beispiel manuell eingeleitete, Kraft an ein nachgeschaltetes Aggregat zu leiten. Damit hat der Stab einen Doppelnutzen und eine Doppelfunktion, wodurch die Gesamtanordnung sehr schlank bauend ausgeführt werden kann. Außerdem kann die externe, manuell eingeleitete Kraft oder Bewegung durch den Reluktanzmotor geeignet verstärkt werden, indem dieser, von außen in den Stab eingeleiteten Kraft oder Bewegung die durch den Reluktanzmotor auf den Stab aufgebrachte Bewegung oder Kraft überlagert wird.

Bei einer bevorzugten Ausführungsform der Erfindung ist der Stab koaxial zu dem Ständer in dessen Innern angeordnet. Des Weiteren ist der Stab in dem Ständer an dessen Innenwand gleitend beweglich gelagert.

Dabei kann der Ständer ein dünnwandiges Tragrohr aufweisen, das an einer Stirnseite des Läuferrohrs aus diesem herausragt und zur Abstützung an einem ortsfesten Teil eingerichtet ist. Das ortsfeste Teil ist zum Beispiel ein Aggregat, in das die Bewegung/Kraft von dem Stab einzuleiten ist.

Vorzugsweise ist der Stab im Inneren des Ständers angeordnet ist und ragt zumindest an einem Ende aus diesem heraus. In diesem Fall ist der Reluktanzmotor als Innenläufer ausgestaltet. Alternativ dazu ist es jedoch auch möglich und im Bereich der Erfindung, die Anordnung "umzustülpen", so dass der Stab selbst ein Rohr ist und der Reluktanzmotor in dessen Innern angeordnet ist.

Die Ständerspulen sind in dem Ständer so angeordnet, dass ihre Mittellängsachse mit der Arbeitsbewegungsrichtung des Läufers fluchtet.

Vorzugsweise ist der Ständer aus im Wesentlichen scheibenförmigen, zum Beispiel geblechten Weicheisenelementen gebildet. Es ist jedoch auch möglich, den Ständer aus gepresstem Eisenpulver herzustellen, dessen Partikel durch Kunststoff miteinander verbunden (aber elektrisch voneinander isoliert) sind.

In einer Ausführungsform der Erfindung ist das Läuferrohr an seinen beiden Stirnseiten verschlossen. Dabei kann an einer Stirnseite des Läuferrohres eine starre Verbindung des Läuferrohres mit dem Stab, zum Beispiel durch Verschweißen, Verpressen, oder dergl. vorgesehen sein. An der anderen Stirnseite des Läuferrohres kann eine Öffnung vorgesehen sein, durch die das Tragrohr des Ständers in Arbeitsbewegungsrichtung verschiebbar herausragt. In dem Tragrohr kann der Stab im Gleitsitz in Arbeitsbewegungsrichtung verschiebbar aufgenommen sein.

Der Ständer kann erfindungsgemäß wenigstens zwei Gruppen von Ständerspulen aufweisen, die mit phasenversetztem Strom beaufschlagt werden. Dabei sind die Gruppen der Ständerspulen in Abhängigkeit von ihrer Anzahl in Arbeitsbewegungsrichtung des Läufers entlang des Ständers so versetzt, dass jeweils wenigstens eine Gruppe von Ständerspulen mit den Zähnen des Weicheisenkerns des Läufers im Wesentlichen fluchtet.

Der Ständer ist zumindest teilweise ein weichmagnetischer Formkörper, der zum Beispiel aus gepresstem und/oder gesintertem Metallpulver ist.

Der Stab trägt einen Kraft- und/oder einen Wegsensor, um die an seinem einen Ende aufgenommene Betätigungskraft und/oder eine Verschiebung oder Position des Stabes relativ zu dem Ständer zu erfassen und die erfasste Kraft/den erfassten Weg wiedergebende Signale an eine elektronische Steuereinheit zu leiten.

Die elektronische Steuereinheit ist vorzugsweise dazu eingerichtet bzw. programmiert, aus den Kraft-/Weg-Signalen Ansteuersignale für die Ständerspulen zu erzeugen, so dass in Abhängigkeit von der am einen Ende des Stabes eingeleiteten Größe in Abhängigkeit von einer Verstärkungsfunktion am anderen Ende des Stabes eine entsprechende Ausgangsgröße zur Verfügung steht.

Vorzugsweise weist die elektronische Steuereinheit einen DC/DC-Wandler auf, der an seiner Eingangsseite mit einer Gleichstromversorgung verbunden ist, und an dessen Ausgangsseite eine Pufferkapazität angeschlossen ist, so dass bei einem Betrieb des Stabaktuators auftretende Lastspitzen im Wesentlichen rückwirkungsfrei für die Gleichstromversorgung sind. Damit kann erfolgreich dem Umstand Rechnung getragen werden, dass die immer stärker belasteten Bordnetze in Kraftfahrzeugen mit stark schwankendem Energiebedarf, Spannungseinbrüchen und Stromspitzen konfrontiert sind. Daher stellt die Erfindung einen lokalen Energiespeicher in Verbindung mit einer dezentralen elektronischen Steuerung als einen wirkungsvollen Lösungsansatz bereit.

Grundsätzlich sind auch noch andere Anwendungsmöglichkeiten des vorstehend beschriebenen Reluktanzmotors denkbar, die alle von der vorliegenden Erfindung umfasst sind.

Der Einsatz des erfindungsgemäßen Stabaktuators bzw. der erfindungsgemäßen Schaltunterstützung an. Fahrzeuggetrieben hängt u.a. vor dem Hintergrund der Bauraumverhältnisse entscheidend von der Integrationsfähigkeit am Getriebe ab. Da bei NKW-Getrieben die Schalt- und Wählbewegung klar voneinander getrennt sind und somit am Getriebeschalthebel keine Überlagerung von Schalt- und Wählbewegungen stattfindet, ist es möglich, die erfindungsgemäße Schaltunterstützung (Stabaktuator) fest am Getriebegehäuse anzubauen.

In modernen PKW- und Light-Truck-Getrieben wird dagegen die Schalt- und Wählbewegung meist überlagert. Dies bedeutet, dass der Krafteinleitungspunkt am Getriebeschalthebel räumlich variiert.

In den eingesetzten Außenschaltelementen wird dies dadurch kompensiert, dass zwischen dem getriebegehäusefesten Abstützpunkt, z.B. des Schaltseilzuges, und dem Anlenkpunkt zum Getriebeschalthebel eine Gelenkverbindung vorgesehen ist.

Bei fester Montage einer äußeren Schaltkraftunterstützung am Getriebe müsste diese vor dem Abstützpunkt des Schalters in die Schaltung integriert werden. Dies ist aus Bauraumgründen äu-βerst problematisch.

Er ist daher bei einer weiteren bevorzugten Ausführungsform des erfindungsgemäßen Stabaktuators zur günstigen Ausnutzung des im Bereich der Außenschaltung am Getriebe verfügbaren Bauraums vorgesehen, den Stabaktuator bzw. die Schaltunterstützung gelenkig am Getriebegehäuse anzubinden.

Ferner haben im Rahmen der Erfindung durchgeführte Untersuchungen ergeben, dass die Verstärkung der durch den Fahrer aufgebrachten Schaltkraft in der Regel proportional entsprechend einer vorgegebenen Kennlinie erfolgt.

Zur Verbesserung des Schaltkomforts wäre es vorteilhaft, bei kaltem Getriebe eine größere Verstärkung der vom Fahrer eingeleiteten Schaltkraft vorzunehmen, als bei Betriebstemperatur.

Daher ist bei einer weiteren bevorzugten Ausführungsform vorgesehen, dass in der elektronischen Steuerung ein Temperatursensor integriert ist. Hierdurch ist es möglich, die Temperatur im Motorraum ausreichend genau zu erfassen und dementsprechend die Kennlinie der Kraftverstärkung abhängig von der Temperatur im Motorraum anzupassen und damit unterschiedliche Kennlinien für unterschiedliche Temperaturen zu erzeugen.

Weitere Merkmale, Eigenschaften, Vorteile und mögliche Abwandlungen werden anhand der nachstehenden Beschreibung erläutert, in der auf die beigefügten Zeichnungen Bezug genommen ist. Darin zeigt:
- Fig. 1: eine Ausführungsform eines erfindungsgemäßen Stabaktuators schematisch in perspektivischem Längsschnitt,
- Fig. 2: das in Fig. 1 mit einem Kreis markierte Detail X in vergrößerter Darstellung, und
- Fig. 3: eine Prinzipskizze eines Reluktanz-Linearmotors.

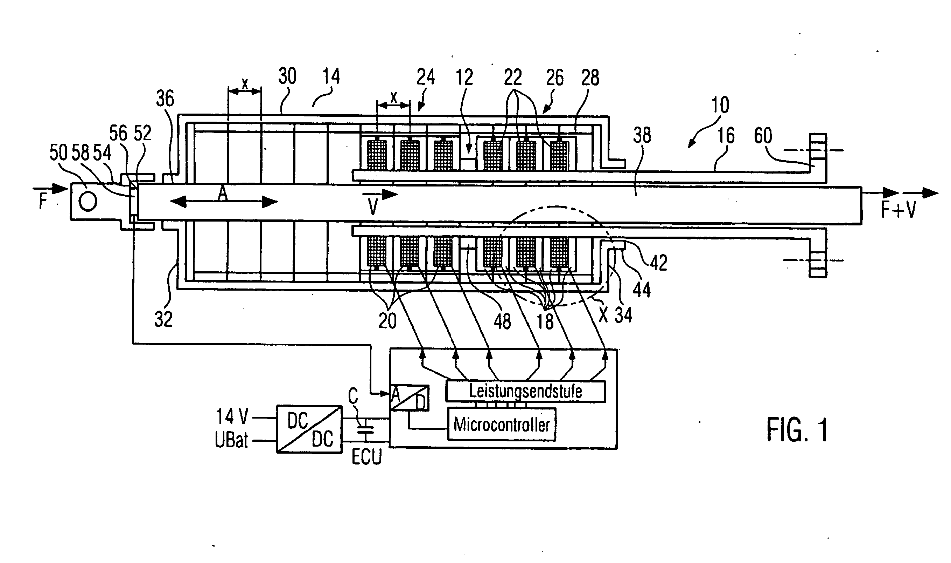

In Fig. 1 ist eine Ausführungsform eines elektrischen Stabaktuator 10 veranschaulicht. Dieser Stabaktuator 10 hat einen im Wesentlichen hohlzylindrischen Ständer 12 und einen Läufer 14. Der Ständer 12 hat ein relativ dünnwandiges Tragrohr 16, an dessen äußerer Mantelfläche nebeneinander im Wesentlichen ringscheibenförmige Weicheisenelemente 18 befestigt sind. Zueinander benachbarte scheibenförmige Weicheisenelemente 18 sind so angeordnet, dass in dem Ständer 12 entlang dessen Umfang mehrere Nuten 20 im Abstand zueinander ausgebildet sind. In einer jeweiligen Nut 20 zwischen zwei benachbarten Weicheisenelementen 18 ist jeweils eine Ständerspule 22 aufgenommen. Die Weicheisenelemente 18 des Ständers 18 sind geblechte oder aus gepresstem und/oder gesintertem Metallpulver hergestellte weichmagnetische Formkörper. In dem gezeigten Beispiel hat der Ständer 12 zur Bildung einer zweiphasigen Anordnung des Linearaktors zwei Gruppen 24, 26 von Ständerspulen 22. Die Ständerspulen 22 haben eine Mittellängsachse, die mit der Arbeitsbewegungsrichtung A des Läufers 14 fluchtet.

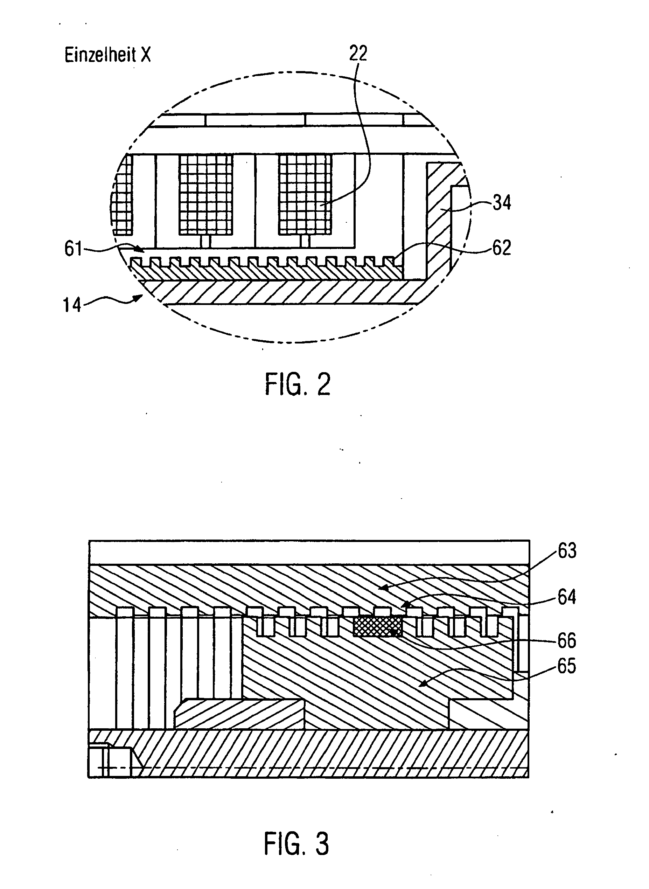

Der Läufer 14 umgibt den Ständer 12 konzentrisch unter Bildung eines Arbeitsluftspaltes 28. Dabei weist der Läufer 14 einen Weicheisenkern 61 auf, der mit einer Mehrzahl von Zähnen versehen ist, von denen in Fig. 2 einer repräsentativ für alle Zähne mit dem Bezugszeichen 62 versehen ist.

Die beiden Gruppen 24, 26 von Ständerspulen 22 sind voneinander durch einen Abstandshalter 48 um x/2 beabstandet. Dementsprechend werden sie auch mit um π/2 phasenversetztem Strom beaufschlagt, um den Läufer 14 relativ zum Ständer 12 in Arbeitsbewegungsrichtung A zu verfahren.

Das Läuferrohr 30 ist im Beispielsfall an seinen beiden Stirnseiten 32, 34 verschlossen. An einer Stirnseite 32 (in der Fig. links.) ist das Läuferrohr 30 mit einem Stab 38 des Läufers 14 fest verbunden. Durch Verschweißen eines den Stab 38 umgreifenden Bundes 36 der Stirnseite 32 des Läuferrohres 30 mit dem Stab 38 kann eine starre Verbindung erreicht werden. An der anderen Stirnseite 34 des Läuferrohres 30 (in der Fig. rechts) ist eine Öffnung 42 mit einer Gleitbuchse 44 vorgesehen, durch die das Tragrohr 16 des Ständers 12 herausragt. Dabei ist das Läuferrohr 30 in Arbeitsbewegungsrichtung A relativ zu dem Tragrohr 16 des Ständers 12 verschiebbar. Der Stab 38 des Läufers 14 ist koaxial zu dem Ständer 12 im Innern des Tragrohres 16 des Ständers 12 angeordnet und ist an dessen Innenwand gleitend beweglich aufgenommen. Damit ist der Stab 38 des Läufers 14 relativ zu dem Ständer 12 beweglich. Um die magnetischen Verluste möglichst gering zu halten, ist der Ringspalt zwischen dem Stab 38 und der Innenwand des Tragrohres 16 des Ständers 12 minimal dimensioniert ohne die Beweglichkeit des Stabes 38 relativ zum Ständer 12 negativ zu beeinflussen.

An dem mit dem Läuferrohr 30 verschweißten Ende des Stabes 38 ist dieser mit einem Flansch 50 zur Kraft-Einleitung versehen. Der Flansch 50 hat ein das Ende des Stabes 38 übergreifendes Sackloch 52, zwischen dessen Boden 54 und der Stirnfläche 56 des Ende des Stabes 38 ein Piezokraftsensor 58 aufgenommen ist. Mittels des Flansches 50 oder einer vergleichbaren Anordnung ist der Stab 38 dazu eingerichtet, eine Betätigungskraft F an seinem einen Ende aufzunehmen und an seinem anderen Ende die verstärkte Betätigungskraft F→ + V→ abzugeben, wobei V→ die durch den Läufer 14 aufgebrachte Motorkraft ist, die der Betätigungskraft F→ überlagert wird. Das Tragrohr 16 des Ständers 12 ragt an der Stirnseite 34 des Läuferrohrs 30 aus diesem heraus und ist mittels zum Beispiel eines Schraubflansches 60 zur Abstützung an einem ortsfesten Teil, zum Beispiel einem Getriebe oder einem sonstigen Aggregat eingerichtet. In dem Tragrohr 16 des Ständers 12 ist der Stab 38 angeordnet und reicht über den Schraubflansch 60 hinaus in das nicht weiter veranschaulichte Aggregat, um darin eine Stellaufgabe auszuführen, wenn der Stab 38 manuell und/oder elektrisch betätigt wird. Der Piezokraftsensor 58 erfasst die an dem Flansch 50 am einen Ende des Stabes aufgenommene Betätigungskraft relativ zu dem Ständer 12 und gibt ein die erfasste Kraft wiedergebendes Signal an eine elektronische Steuereinheit ECU ab.

Die elektronische Steuereinheit ECU hat einen A/D-Wandler zur prozessorgerechten Umsetzung des Signals aus dem Piezokraftsensor 58 zur Weiterverarbeitung durch einen Microcontroller, der dazu eingerichtet und programmiert ist, aus dem Kraft/Weg-Signal Ansteuersignale für die Ständerspulen 22 zu erzeugen, damit der Reluktanzmotor 10 eine Überlagerungskraft V→ bereitstellt. Auf diese Weise wird in Abhängigkeit von der am einen Ende des Stabes 38 eingeleiteten Größe F→ in Abhängigkeit von einer in dem Microcontroller realisierten Verstärkungsfunktion am anderen Ende des Stabes 38 eine entsprechende Ausgangsgröße F→ + V→ zur Verfügung gestellt.

Schließlich hat die elektronische Steuereinheit ECU einen DC/DC-Wandler, der an seiner Eingangsseite mit einer Gleichstromversorgung, zum Beispiel dem KFZ-Bordnetz, verbunden ist. An der Ausgangsseite des DC/DC-Wandlers ist eine Pufferkapazität C angeschlossen, so dass bei einem Betrieb des Stabaktuators auftretende Lastspitzen im Wesentlichen rückwirkungsfrei für die Gleichstromversorgung sind.

Die erläuterten Ausführungsformen eignen sich besonders, einen Hub von etwa +/- 25 mm bei einer maximalen Kraft von etwa 250 N und einem Kraftgradienten von 25 N/ms in einem relativ schmalen Bauraum von etwa 40 mm Durchmesser und einer Länge von etwa 100 mm zu realisieren. Dabei kann eine Betriebstemperatur von etwa -30°C bis +130°C und eine kurzzeitige Spitzentemperatur von etwa -40°C bis etwa +150°C ohne nennenswerte Einschränkung der Funktionalität herrschen.

Vorstehend ist eine zweiphasig zu betreibende Anordnung eines erfindungsgemäßen Reluktanzmotors bzw. -aktors beschrieben. Es ist jedoch auch im Bereich der vorliegenden Erfindung, ein drei-oder mehrphasige Anordnung zu gestalten. Dazu sind die weiteren Statorensysteme mit zugehörigen Spulen entsprechend dem/den vorgesehenen Phasenversätzen der elektrischen Antriebsleistung geometrisch entlang der Zähne des Weicheisenkerns des Läufers versetzt zu positionieren.

In Fig. 3 ist zur Erläuterung des Aufbaus eines Reluktanz-Linearmotors eine Prinzipskizze dieses Motortyps dargestellt, wobei Fig. 3 einen Schnitt einer Einzelphase darstellt.

Diese Schnittdarstellung lässt einen magnetischen Rückschluss-Läufer 63 erkennen, der mit Polzähnen 64 versehen ist. Innerhalb des Rückschluss-Läufers 63 ist ein Statorblock 65 vorgesehen, der mit Polzähnen versehen ist. Ferner ist zwischen dem Rückschluss-Läufer und dem Statorblock 65 eine Statorwicklung 66 beispielhaft verdeutlicht.

In Ergänzung zur schriftlichen Offenbarung der Erfindung wird hiermit explizit auf deren zeichnerische Darstellung in den Fig. 1 und 2 verweisen.

**Bezugszeichenliste**

| | |
|---|---|
| 10 | Stabaktuator |
| 12 | Ständer |
| 14 | Läufer |
| 16 | Tragrohr |
| 18 | Weicheisenelement |
| 20 | Nuten |
| 22 | Ständerspule |
| 24, 26 | Gruppen von Ständerspulen |
| 28 | Arbeitsluftspalt |
| 30 | Läuferrohr |
| 32, 34 | Stirnseiten |
| 36 | Bund der Stirnseite 32 |
| 38 | Stab |
| 40 | |
| 42 | Öffnung |
| 44 | Gleitbuchse |
| 46 | |
| 48 | Abstandshalter |
| 50 | Flansch |
| 52 | Sackloch |
| 54 | Boden |
| 56 | Stirnfläche |
| 58 | Piezokraftsensor |
| 60 | Schraubflansch |
| 61 | Weicheisenkern |
| 62 | Zähne des Weicheisenkerns 61 |
| 63 | magnetische Rückschlussläufer |
| 64 | Polzähne des Läufers |
| 65 | Statorblock mit Polzähnen |
| 66 | Statorwicklung |
| N, S | Permanentmagneten |
| F | Betätigungskraft |
| V | Motorkraft |

## Patentansprüche

1. Stabaktuator (10), insbesondere für automotive Nebenantriebe
- mit einem Ständer (12), der zumindestens eine Ständerspule (22) und ein Tragrohr (16) aufweist, das zur Abstützung an einem ortsfesten Teil vorgesehen ist;
- mit einem Läufer (14), der den Ständer (12) umgibt und der ein Läuferrohr (30) aufweist, an dessen einer Stirnseite (34) das Tragrohr (16) aus diesem herausragt,
- mit einem Stab (38), der koaxial zum Ständer (12) in dessen Tragrohr (16) angeordnet und an deren Innenwand gleitbeweglich gelagert ist,
- wobei der Läufer (14) axial relativ zum Ständer (12) verschieblich gelagert ist,
- wobei der Läufer (14) mit dem Stab (38) zur Übertragung einer an einem seiner Enden eingeleiteten Betätigungskraft (F) und einer vom Läufer (14) aufgebrachten, der Betätigungskraft (F) überlagerten Motorkraft (V) verbunden ist,
**dadurch gekennzeichnet,**
- **dass** der Läufer (14) einen gezahnten Weicheisenkern (61) aufweist, und
- **dass** der Stab (38) an beiden Enden des Tragrohrs (16) aus diesem herausragt.

2. Stabaktuator nach Anspruch 1, **dadurch gekennzeichnet, dass** der Läufer (14) relativ zum Ständer (13) drehbar gelagert ist.

3. Stabaktuator nach Anspruch 1 oder 2, **dadurch gekennzeichnet, dass**
- der Ständer (12) eine hohlzylindrische Gestalt aufweist und zumindest teilweise aus einem weichmagnetischen Material gebildet ist,
- in dem Ständer (12) entlang dessen Umfang mehrere Nuten (20) im Abstand zueinander ausgebildet sind, in denen jeweils eine Ständerspule (22) angeordnet ist,
- der Ständer (12), durch einen Arbeitsluftspalt (28) getrennt, Zähnen (62) des gezahnten Weicheisenkerns (61) des Läufers (14) zugewandt ist.

4. Stabaktuator nach einem der Ansprüche 1 bis 3, **dadurch gekennzeichnet, dass** der Weicheisenkern (61) des Läufers (14) an seiner von dem Luftspalt (28) abgewandten Seite an einem Läuferrohr (30) angeordnet sind, das mit dem Stab (38) verbunden ist, wobei der Stab (38) relativ zu dem Ständer (12) beweglich ist.

5. Stabaktuator nach einem der vorhergehenden Ansprüche, bei dem die Ständerspulen (22) eine Mittellängsachse haben, die mit der Arbeitsbewegungsrichtung des Läufers (14) fluchtet.

6. Stabaktuator nach einem der vorhergehenden Ansprüche, bei dem der Ständer (12) aus im Wesentlichen scheibenförmigen Weicheisenelementen (18) gebildet ist.

7. Stabaktuator nach einem der vorhergehenden Ansprüche, bei dem das Läuferrohr (30) an seinen beiden Stirnseiten (34, 36) verschlossen ist, wobei an einer Stirnseite (34) eine starre Verbindung des Läuferrohres (30) mit dem Stab (38) vorgesehen ist und an der anderen Stirnseite (26) eine Öffnung (42) vorgesehen ist, durch die das Tragrohr (16) des Ständers (12) in Arbeitsbewegungsrichtung verschiebbar herausragt.

8. Stabaktuator nach einem der vorhergehenden Ansprüche, bei dem der Ständer (12) wenigstens zwei Gruppen (24, 26) von Ständerspulen (22) aufweist, die mit phasenversetztem Strom beaufschlagt werden, wobei die Gruppen (24, 26) der Ständerspulen (22) in Abhängigkeit von ihrer Anzahl in Arbeitsbewegungsrichtung des Läufers (14) entlang des Ständers (12) so versetzt sind, dass jeweils wenigstens eine Gruppe von Ständerspulen (22) mit den Zähnen (62) des Weicheisenkerns (61) des Läufers (14) im Wesentlichen fluchtet.

9. Stabaktuator nach einem der vorhergehenden Ansprüche, bei dem der Ständer (18). zumindest teilweise ein weichmagnetischer Formkörper, vorzugsweise aus gepresstem und/oder gesintertem Metallpulver ist.

10. Stabaktuator nach einem der vorhergehenden Ansprüche, bei dem der Stab (38) einen Kraft- und/oder Wegsensor (58) trägt, um die an seinem einen Ende aufgenommene Betätigungskraft und/oder eine Verschiebung oder Position des Stabes (38) relativ zu dem Ständer (12) zu erfassen und ein die erfasste Kraft / den erfassten Weg wiedergebendes Signal an eine elektronische Steuereinheit (ECU) zu leiten.

11. Stabaktuator nach einem der vorhergehenden Ansprüche, bei dem die elektronische Steuereinheit (ECU) dazu eingerichtet oder programmiert ist, aus dem Kraft/Weg-Signal für die Ständerspulen (22) Ansteuersignale zu erzeugen, so dass in Abhängigkeit von der am einen Ende des Stabes (38) eingeleiteten Größe in Abhängigkeit von einer Verstärkungsfunktion am anderen Ende des Stabes (38) eine entsprechende Ausgangsgröße zur Verfügung steht.

12. Stabaktuator nach einem der vorhergehenden Ansprüche, bei dem die elektronische Steuereinheit (ECU) einen DC/DC-Wandler aufweist, der an seiner Eingangsseite mit einer Gleichstromversorgung verbunden ist, und an dessen Ausgangsseite eine Pufferkapazität (C) angeschlossen ist, so dass bei einem Betrieb des Stabaktuators (10) auftretende Lastspitzen im Wesentlichen rückwirkungsfrei für die Gleichstromversorgung sind.

13. Stabaktuator einem der Ansprüche 9 bis 11, **dadurch gekennzeichnet, dass** ein Motorraum-Temperatursensor in die Steuereinheit (ECU) integriert ist.

14. Stabaktuator einem der Ansprüche 1 bis 12, **gekennzeichnet durch** eine Gelenkverbindung zur Anbindung des Stabaktuators (10) am ortsfesten Bauteil.

## Claims

1. A rod actuator (10), in particular for automotive auxiliary drives, comprising
- a stator (12) including at least one stator coil (22) and a supporting tube (16) provided for support at a stationary part;
- a rotor (14) surrounding the stator (12) and including a rotor tube (30) having an end face (34) on which the supporting tube (16) protrudes from the rotor tube;
- a rod (38) which is arranged coaxially with the stator (12) inside the supporting tube (16) thereof and is mounted for sliding movement on the inner wall thereof;
- the rotor (14) being mounted for axial displacement in relation to the stator (12),
- the rotor (14) being connected to the rod (38) for transmitting an actuating force (F) introduced at one of its ends and a motor force (V) applied by the rotor (14) and superimposed on the actuating force (F),
**characterized in that**
- the rotor (14) includes a toothed soft-iron core (61), and
- the rod (38) protrudes from the supporting tube (16) at both ends thereof.

2. The rod actuator according to claim 1, **characterized in that** the rotor (14) is mounted for rotation in relation to the stator (12).

3. The rod actuator according to claim 1 or 2, **characterized in that**
- the stator (12) has a hollow cylindrical shape and is formed at least in part of a soft magnetic material,
- a plurality of grooves (20) are formed at a distance from each other in the stator (12) along the circumference thereof, each groove having a stator coil (22) arranged therein,
- the stator (12), separated by a working air gap (28), faces teeth (62) of the toothed soft-iron core (61) of the rotor (14).

4. The rod actuator according to any of claims 1 to 3, **characterized in that** the soft-iron core (61) of the rotor (14) is arranged at a rotor tube (30) on its side facing away from the air gap (28), the rotor tube being connected to the rod (38), the rod (38) being movable in relation to the stator (12).

5. The rod actuator according to any of the preceding claims, in which the stator coils (22) have a center longitudinal axis which is in alignment with the operating movement direction of the rotor (14).

6. The rod actuator according to any of the preceding claims, in which the stator (12) is formed of substantially disk-shaped soft iron members (18).

7. The rod actuator according to any of the preceding claims, in which the rotor tube (30) is closed on its two end faces (34, 36), a rigid connection of e rotor tube (30) with the rod (38) being provided on one end face (34) and an opening (42) being provided on the other end face (36), the supporting tube 16) of the stator (12) protruding through the opening for displacement in the operating movement direction.

8. The rod actuator according to any of the preceding claims, in which the stator (12) includes at least two groups (24, 26) of stator coils (22) which are supplied with phase-shifted current, the groups (24, 26) of stator coils (22) being offset along the stator (12) in the operating movement direction of the rotor (14) depending on their number such that at least one respective group of stator coils (22) is substantially in alignment with the teeth (62) of the soft-iron core (61) of the rotor (14).

9. The rod actuator according to any of the preceding claims, in which the stator (12) is at least partly a soft magnetic molding, preferably made from compressed and/or sintered metal powder.

10. The rod actuator according to any of the preceding claims, in which the rod (38) carries a force and/or displacement sensor (58) to detect the actuating force absorbed at its one end and/or a displacement or position of the rod (38) in relation to the stator (12) and to transmit a signal reproducing the detected force /the detected distance to an electronic control unit (ECU).

11. The rod actuator according to any of the preceding claims, in which the electronic control unit (ECU) is configured or programmed to generate driving signals for the stator coils (22) from the force/displacement signal, so that a corresponding output quantity is available depending on the quantity introduced at one end of the rod (38) and depending on an intensifying function at the other end of the rod (38).

12. The rod actuator according to any of the preceding claims, in which the electronic control unit (ECU) includes a DC/DC converter the input side of which is connected to a direct current supply and the output side of which is connected to a buffer capacitor (C), so that any load peaks occurring during operation of the rod actuator (10) are substantially reactionless for the direct current supply.

13. The rod actuator according to any of claims 9 to 11, **characterized in that** an engine bay temperature sensor is integrated in the control unit (ECU).

14. The rod actuator according to any of claims 1 to 12, **characterized by** an articulation for connecting the rod actuator (10) to the stationary component.

## Revendications

1. Actionneur tige (10), en particulier pour des entraînements auxiliaires automobiles, comportant
- un stator (12) qui présente au moins une bobine de stator (22) et un tube support (16) prévu pour le maintien sur une pièce stationnaire,
- un rotor (14) qui entoure le stator (12) et présente un tube de rotor (30) sur une face frontale (34) duquel le tube support (16) fait saillie hors du tube de rotor,
- une tige (38) qui est agencée de façon coaxiale par rapport au stator (12) dans le tube support (16) de celui-ci et qui est montée à coulissement le long de sa paroi intérieure,
- le rotor (14) étant monté à déplacement axial par rapport au stator (12),
- le rotor (14) étant relié à la tige (38) pour transmettre une force d'actionnement (F) introduite à l'une de ses extrémités et une force motrice (V) appliquée par le rotor (14) et superposée à la force d'actionnement (F), **caractérisé en ce que**
- le rotor (14) présente un noyau en fer doux (61) denté, et
- **en ce que** la tige (38) fait saillie hors du tube support (16) aux deux extrémités de celui-ci.

2. Actionneur tige selon la revendication 1, **caractérisé en ce que** le rotor (14) est monté mobile en rotation par rapport au stator (12).

3. Actionneur tige selon la revendication 1 ou 2, **caractérisé en ce que**
- le stator (12) présente une forme de cylindre creux et est réalisé au moins partiellement en un matériau magnétique doux,
- plusieurs gorges (20) sont réalisées dans le stator (12) le long de sa périphérie et à distance les unes des autres, une bobine de stator (22) étant agencée dans chaque gorge,
- le stator (12), en étant séparé par un entrefer de travail (28), fait face à des dents (62) du noyau en fer doux (61) denté du rotor (14).

4. Actionneur tige selon l'une des revendications 1 à 3, **caractérisé en ce que** le noyau en fer doux (61) du rotor (14), sur sa face opposée à l'entrefer (28), est agencé sur un tube de rotor (30) qui est relié à la tige (38), la tige (38) étant mobile par rapport au stator (12).

5. Actionneur tige selon l'une des revendications précédentes, dans lequel les bobines de stator (22) présentent un axe longitudinal central qui est en alignement avec la direction de déplacement de fonctionnement du rotor (14).

6. Actionneur tige selon l'une des revendications précédentes, dans lequel le stator (12) est composé d'éléments en fer doux (18) sensiblement en forme de disque.

7. Actionneur tige selon l'une des revendications précédentes, dans lequel le tube de rotor (30) est fermé sur ses deux faces frontales (34, 36), une connexion fixe entre le tube de rotor (30) et la tige (38) étant prévue sur une face frontale (34), et un orifice (42) étant prévu sur l'autre face frontale (36), à travers lequel le tube support (16) du stator (12) fait saillie en étant déplaçable dans la direction de déplacement de fonctionnement.

8. Actionneur tige selon l'une des revendications précédentes, dans lequel le stator (12) présente au moins deux groupes (24, 26) de bobines de stator (22) qui sont alimentés en courant déphasé, les groupes (24, 26) des bobines de stator (22) étant décalés, selon leur nombre, le long du stator (12) dans la direction de déplacement de fonctionnement du rotor (14) de telle sorte qu'au moins un groupe respectif de bobines de stator (22) est sensiblement en alignement avec les dents (62) du noyau en fer doux (61) du rotor (14).

9. Actionneur tige selon l'une des revendications précédentes, dans lequel le stator (12) est au moins partiellement un corps moulé magnétique doux, de préférence en poudre de métal pressée et/ou frittée.

10. Actionneur tige selon l'une des revendications précédentes, dans lequel la tige (38) porte un capteur de force et/ou de déplacement (58) pour détecter la force d'actionnement reçue à l'une de ses extrémités et/ou un déplacement ou une position de la tige (38) par rapport au stator (12), et pour envoyer un signal à une unité de commande électronique (ECU) qui représente la force détectée/le déplacement détecté.

11. Actionneur tige selon l'une des revendications précédentes, dans lequel l'unité de commande électronique (ECU) est conçue ou programmée de manière à générer des signaux de pilotage pour les bobines de stator (22) à partir du signal de force/de déplacement, de sorte qu'en fonction d'une grandeur introduite à une extrémité de la tige (38) et d'une fonction de renforcement à l'autre extrémité de la tige (38), une grandeur de sortie correspondante est disponible.

12. Actionneur tige selon l'une des revendications précédentes, dans lequel l'unité de commande électronique (ECU) présente un convertisseur à courant continu qui est relié à une alimentation en courant continu sur sa face d'entrée, une capacité tampon (C) étant reliée à sa face de sortie, de sorte que des pics de charge intervenant lors d'un fonctionnement de l'actionneur tige (10) sont sensiblement sans effets rétroactifs pour l'alimentation en courant continu.

13. Actionneur tige selon l'une des revendications 9 à 11, **caractérisé en ce qu'**un capteur de température de compartiment moteur est intégré dans l'unité de commande (ECU).

14. Actionneur tige selon l'une des revendications 1 à 12, **caractérisé par** un assemblage articulé pour le raccordement de l'actionneur tige (10) au composant stationnaire.
